# EUROPÄISCHE PATENTSCHRIFT

(11) **EP 2 615 413 B1**
(45) Veröffentlichungstag und Bekanntmachung des Hinweises auf die Patenterteilung: **21.12.2016**
(21) Anmeldenummer: 13150376.5
(22) Anmeldetag: 07.01.2013
(51) Int. Cl.: G01B 11/25, B21D 1/12

(54) **Verfahren und eine Vorrichtung zum Entfernen von Fehlern in Fahrzeugkarosserieteilen**
Method and a device for eliminating errors in car body parts
Procédé et dispositif de suppression d'erreurs dans une pièce de carosserie de véhicule

(30) Priorität: 13.01.2012 DE 102012100281
(43) Veröffentlichungstag der Anmeldung: 17.07.2013
(73) Patentinhaber: Jentgens, Dietmar, 5 Praha-Smichov (CZ)
(72) Erfinder: Jentgens, Dietmar, 5 Praha-Smichov (CZ)
(74) Vertreter: Kohlmann, Kai

(56) Entgegenhaltungen:
- DE-A1- 19 956 343
- DE-A1-102004 033 526
- DE-A1-102006 009 912
- DE-B3-102008 006 830

## Beschreibung

Die Erfindung betrifft ein Verfahren zum Entfernen von 3D-Fehlern in der Außenhaut von Karosserien oder von Teilen einer Karosserie umfassend die Schritte:
- Überprüfen der Außenhaut mit Hilfe mindestens eines maschinengeführten Sensors eines optischen Inspektionssystems zur Erkennung von 3D-Fehlern
- Bestimmen der Ausprägung und Speichern der Position von erkannten 3D-Fehlern in Bezug auf die Außenhaut und
- automatisiertes Entfernen der erkannten 3D-Fehler mit Hilfe mindestens eines maschinengeführten Reparaturwerkzeugs des optischen Inspektionssystems an den zuvor gespeicherten Positionen.

Außerdem betrifft die Erfindung eine Vorrichtung nach dem Oberbegriff des Anspruchs 6 zum Entfernen von 3D-Fehlern in der Außenhaut von Karosserien oder von Teilen einer Karosserie.

Die Beseitigung von geringfügigen Karosserieschäden, wie beispielsweise Hagelschäden oder kleinen Parkremplern, erfolgt auf konventionelle Weise durch Spachteln, Schleifen und Lackieren verursacht erhebliche Reparaturkosten.

Für eine schnellere und kostengünstigere Reparatur gibt es verschiedene Lösungsansätze: In auto motor sport, Ausgabe 1/2000, Seite 132 "Rotlicht-Therapie" wird die Infrarot-Technik beschrieben, die direkt außen auf der Blechoberfläche angewendet wird. Das Infrarotsystem wird per Lichtpunkt über die Beule positioniert. Dann wird das Blech von einer temperaturgeregelten Infrarot-Lichtquelle gezielt so erwärmt, dass sich ein konzentrischer Temperaturverlauf um die Delle bildet. Durch die entstehende Temperaturspannung im Blech geht die Beule von selbst zurück. Eine Nachbehandlung oder Lackierung ist nicht notwendig. Nachteilig bei dieser Methode ist jedoch, dass sich lediglich Karosserieschäden bis zu einem Durchmesser von etwa 4 cm reparieren lassen und es in Einzelfällen aufgrund der hohen Temperaturen zu Lackbeschädigungen kommen kann. Schließlich können durch die Wärmebehandlung Dämmmaterialien und/oder Verklebungen auf der rückwärtigen Seite des Blechs beschädigt werden.

Aus Lackiererblatt 4/97, Seiten 14 - 17, "Mit Haken und Hebeln" ist darüber hinaus ein so genanntes Kaltdrückverfahren bekannt, mit dem Beulen mittels spezieller Hebelwerkzeuge von der Rückseite des Bleches ausgedrückt werden. Diese Methode weist jedoch den zentralen Nachteil auf, dass manche Stellen des Fahrzeugblechs, beispielsweise die Strebenbereiche, von der Rückseite nicht, oder nur mit erheblichem Aufwand zugänglich sind. Ist beispielsweise zunächst eine Demontage des Dachhimmels erforderlich, um den Karosserieschaden im Dachbereich zu beseitigen, können die Kostenvorteile dieser Reparaturmethode gegenüber der konventionellen entfallen. Ein weiterer Nachteil des Kaltdrückverfahrens besteht darin, dass das Ausdrücken von Beulen eine große Erfahrung voraussetzt und daher außerordentlich schulungsintensiv ist.

Aus der DE 76 06 691 U ist ein Saugzylinder für verbeulte Karosserien bekannt, der mit einem Gummiformteil auf das Karosserieblech aufgesetzt wird. Über einen Einfüllstutzen werden der Saugraum des Saugzylinders sowie die Beule in der Karosserie mit Wasser gefüllt. Anschließend wird ein in dem Zylinder beweglich geführter Doppelkolben bestehend aus einem Saug- und einem darüber angeordneten Arbeitskolben durch Beaufschlagen des Arbeitskolbens mit Druckluft in Bewegung gesetzt. Mittels des Saugkolbens wird nun das Wasser aus dem Gummiformteil und der Beule in den Saugraum gesaugt.

Hierdurch wird die Beule aus der Karosserie herausgezogen, allerdings nur soweit es das Volumen des begrenzten Saugraums zulässt. Nachteilig ist außerdem die aufwendige Konstruktion des Saugzylinders mit einem Doppelkolben sowie mehreren Ventilen. Schließlich ist die Verwendung von Wasser problematisch. Aufgrund des aus der aufwendigen Konstruktion sowie der Verwendung von Wasser resultierenden hohen Eigengewichts sowie der verminderten Reibung, ist das Anbringen des Saugzylinders, insbesondere an senkrechten Karosserieteilen, schwierig.

Aus der DE 76 08 602 U und der US 4 753 104 sind Ausbeulwerkzeuge bekannt, die mit evakuierbaren Saugglocken arbeiten. Beide Druckschriften beschreiben, dass die Saugglocke in erster Linie das Blech fixiert, während die eigentliche Ausbeulung mittels eines Schlagstieles erfolgt. In der DE 76 08 602 U wird jedoch erwähnt, dass bei nur geringer Spannung der Wölbung auch schon die Erzeugung des Unterdrucks innerhalb der Glocke die erwünschte Ausbeulwirkung hervorrufen kann.

Sämtlichen vorgenannten Verfahren haftet der Nachteil an, dass die jeweiligen Verfahren zur Karosseriereparatur viel Erfahrung voraussetzen, wodurch die Qualität der Reparatur schwankt. Des Weiteren bereitet die Erkennung kleiner Beschädigungen der Karosserie mit bloßem Auge vielfach Probleme.

Die DE 199 56 343 A1 offenbart ein gattungsgemäßes automatisiertes Verfahren zum Entfernen von Fehlstellen in der Außenhaut von Karosserieteilen, das folgende Schritte umfasst:
- Überprüfen der Außenhaut eines Karosserieteils mit Hilfe einer von einem Industrieroboter geführten Abtasteinrichtung. Die Abtasteinrichtung weist einen Laser-Abtastkopf auf. Durch Abtastung der gesamten Oberfläche des Karosserieteils können ebene und gekrümmte Oberflächen auf mögliche Fehlstellen überprüft werden.
- Die Fehlerqualität und Position der Fehlstellen auf dem Karosserieteil werden in Form entsprechender Befehle und Koordinaten an einen separaten Industrieroboter weitergegeben.
- Der Industrieroboter verarbeitet diese Informationen und bearbeitet zielgerichtet mittels eines Schleifkopfs nur die Fehlstellen.

Ferner offenbart die DE 10 2008 006830 B3 ein Verfahren und eine handgeführte Vorrichtung zum Entfernen von Dellen, insbesondere in Kfz-Karosserien, wobei die Vorrichtung ein Magnetfelderzeuger mit einer Induktionsspule zur Erzeugung eines elektromagnetischen Feldes aufweist. Im Bereich der Delle wird das Blech dem elektromagnetischen Feld ausgesetzt und dadurch erwärmt. Gleichzeitig übt das elektromagnetische Feld auf die Delle eine elektromagnetische Kraft aus, die eine Verformung der Delle über den glatten Zustand des Blechs hinaus bewirkt. Die Rückkopplung über den Erfolg der Anwendung Verfahrens erfolgt visuell und haptisch, indem die Struktur im Bereich der Delle zunächst hörbar - und für die Bedienperson fühlbar - über die glatte Nulllage hinaus überschnappt.Alternativ kann der Erfolg der Anwendung des Verfahrens mittels einer Sensoreinrichtung überprüft werden. Diese Sensorvorrichtung umfasst einen Messbolzen, der unmittelbar auf der Karosserieoberfläche aufliegt und bei Verformung der Delle gemäß eines vorgegebenen Sollverformungswegs gegen die Federkraft nach oben bewegt wird und dort einen Schalter betätigt, der sodann die Induktionsspule von der Spannungsversorgung trennt. Ausgehend von diesem Stand der Technik liegt der Erfindung die Aufgabe zu Grunde, ein Verfahren und eine Vorrichtung zum automatisierten Entfernen von 3D-Fehlern in der Außenhaut von lackkierten Karosserien oder von lackkerten Teilen einer Karosserie zu schaffen, mit dem sich 3D-Fehler, insbesondere auch kleine Beulen und Einfallstellen mit gleich bleibender Qualität entfernen lassen, ohne dass der Lackaufbau beschädigt wird.

Diese Aufgabe wird bei einem Verfahren der eingangs erwähnten Art dadurch gelöst,dass
- vor dem automatisierten Entfernen der erkannten 3D-Fehler die Schichtdicke eines Lackaufbaus auf der Außenhaut erfasst wird,
- zumindest die Schichtdicke des Lackaufbaus in eine Steuerung des Inspektionssystems eingegeben wird,
- die erkannten 3D-Fehler mit Hilfe eines Reparaturwerkzeugs zur Erzeugung von Induktionswärme in der Außenhaut entfernt werden, wobei die Parameter der Induktionswärmebehandlung, nämlich die Temperaturobergrenze und die Dauer der Induktionswärmebehandlung, in Abhängigkeit von den in die Steuerung eingegebenen Daten eingestellt werden.

Eine Vorrichtung nach dem Oberbegriff des Anspruchs 6 zur Durchführung des Verfahrens ist dadurch gekennzeichnet, dass das Reparaturwerkzeug eine Induktionsheizung zur Erzeugung von Induktionswärme in der Außenhaut aufweist, an dem optischen Inspektionssystem Mittel zum Erfassen der Schichtdicke des Lackaufbaus auf der Außenhaut angeordnet sind und die Steuerung zum Bestimmen der Ausprägung und Speichern der Position erkannter 3D-Fehlern in Bezug auf die Außenhaut und zur Steuerung des Reparaturwerkzeugs unter Berücksichtigung der zuvor bestimmten Ausprägung und gespeicherten Position von 3D-Fehlern sowie der erfassten Schichtdicke ausgestaltet ist.

Die erkannten 3D-Fehler werden mit Hilfe eines Reparaturwerkzeugs zur Erzeugung von Induktionswärme entfernt. Bei der induktiven Erwärmung wird mittels einer von niederfrequentem Wechselstrom durchflossenen Spule ein magnetisches Wechselfeld erzeugt, das in dem Blech der Karosserie bzw. des Karosserieteils Wirbelströme induziert. Die Wirbelstromverluste sorgen für die Aufheizung des Blechs. Der wesentliche Vorteil des Verfahrens besteht darin, dass die Wärme unmittelbar in dem Blech selbst entsteht und nicht durch Wärmeleitung übertragen werden muss, die zu Beschädigungen des empfindlichen Lackaufbaus führen kann. Des Weiteren kann die induktive Wärmezufuhr durch nicht leitende Materialien, wie beispielsweise den Lackaufbau, hindurch erfolgen. Schließlich entstehen bei der induktiven Erwärmung keine Verunreinigungen durch eine externe Wärmequelle. Vor diesem Hintergrund ist die Zufuhr von Induktionswärme besonders geeignet für die automatisierte Reparatur lackierter Karosserien bzw. Karosserieteile. Die maximale Temperatur mit der die Induktionswärmebehandlung durchgeführt wird, beträgt abhängig von der Schichtdicke des Lackaufbaus, etwa 90 Grad und wird üblicherweise in weniger als 0,5 Sekunden nach dem Aufsetzen der Induktionsheizung auf den 3D-Fehler erreicht. Durch die entstehende Temperaturspannung im Blech geht der 3D-Fehler, insbesondere die Beule von selbst zurück. Eine Nachbehandlung oder Erneuerung des Lackaufbaus ist nicht erforderlich. Bei 3D-Fehlern mit größerem Durchmesser kann es erforderlich sein, die Induktionswärmebehandlung mehrfach an der zuvor ermittelten Position des 3D-Fehlers durchzuführen.

Da die Schichtdicke des Lackaufbaus für die maximale Temperatur und Dauer der Induktionswärmebehandlung von Bedeutung ist, wird der Steuerung des Inspektionssystems die Schichtdicke des Lackaufbaus bekannt gegeben. Vor dem automatisierten Entfernen der erkannten 3D-Fehler wird die Schichtdicke des Lackaufbaus auf der Außenhaut ebenfalls automatisiert erfasst. Zu diesem Zweck kann ein Lackschichtdicke-Messer an dem Manipulator des Roboters des optischen Inspektionssystems angeordnet sein. Für eine optimale Entfernung der 3D-Fehler werden in die Steuerung des Oberflächeninspektionssystems darüber hinaus Kenndaten über die Materialbeschaffenheit der Karosserie bzw. des Karosserieteils, insbesondere über die Art und Zusammensetzung des Blechs sowie dessen Stärke (Dicke in mm) eingegeben. In Abhängigkeit von den eingegebenen Daten werden die Parameter der Induktionswärmebehandlung eingestellt, nämlich die Temperaturobergrenze von beispielsweise 90 ° Celsius und die Dauer der Wärmebehandlung.

Die automatisierte Überprüfung der Außenhaut zur Erkennung von 3D-Fehlern erfolgt mit an sich bekannten optischen Inspektionssystemen. Der Vorteil der optischen Oberflächeninspektion besteht darin, dass die empfindliche Außenhaut der Karosserie berührungs- und zerstörungsfrei auf das Vorliegen von 3D-Fehlern mit Hilfe von Kameras geprüft wird. Die Sensoren erkennen auch sehr kleine Beulen. Ein optisches Inspektionssystem zur Erkennung von 3D-Fehlern, insbesondere in glänzenden und spiegelnden Oberflächen, wird beispielsweise in dem Prospekt ABISreflect Oberflächeninspektionen der Steinbichler Optotechnik GmbH, 83115 Neubeuern aus dem Jahr 2011 offenbart.

Die Ausprägung, insbesondere der Durchmesser und die Tiefe des erkannten 3D-Fehlers, wird von einer Steuerung des Inspektionssystems anhand der von dem Sensor erfassten Bilddaten bestimmt. Des Weiteren speichert die Steuerung die Position von erkannten 3D-Fehlern auf der Außenhaut der Karosserie bzw. des Karosserieteils. Um die Position zu speichern, befindet sich das Karosserieteil bzw. die Karosserie während der Überprüfung vorzugsweise unbewegt in einem raumfesten Koordinatensystem des Inspektionssystems. Innerhalb dieses raumfesten Koordinatensystems ist der Steuerung die Position und Orientierung des Sensors zu jedem Zeitpunkt bekannt und damit auch die Position der von dem Sensor erkannten 3D-Fehler in der Außenhaut.

Die Steuerung des optischen Inspektionssystems nutzt nun die zuvor bestimmten Daten über die Ausprägung des 3D-Fehlers sowie die gespeicherten Informationen über die Position, um den 3D-Fehler automatisiert mit Hilfe mindestens eines maschinengeführten Reparaturwerkzeugs an den zuvor gespeicherten Positionen zu entfernen.

An sich bekannte optische Inspektionssysteme mit maschinengeführten Sensoren lassen sich zur Durchführung des erfindungsgemäßen Verfahrens einfach anpassen, in dem nicht nur der Sensor sondern auch das Reparaturwerkzeug mit einem Roboterarm des optischen Inspektionssystems geführt werden. Vorzugsweise werden der Sensor und das Reparaturwerkzeug von demselben Roboterarm des an sich bekannten optischen Inspektionssystems geführt. Entweder sind der Sensor und das Reparaturwerkzeug wahlweise mit dem Roboterarm lösbar verbindbar, wobei entweder der Sensor oder das Reparaturwerkzeug während des Nicht-Gebrauchs in einem Magazin aufbewahrt werden. Alternativ sind der Sensor und das Reparaturwerkzeug permanent an demselben Roboterarm angeordnet, wobei der Sensor und das Reparaturwerkzeug zwischen einer Arbeitsposition und einer Ruheposition hin- und herbewegbar sind. Die Hin- und Herbewegung kann beispielsweise dadurch erfolgen, dass der Sensor und das Reparaturwerkzeug an einem endseitigen Drehgelenk des Roboterarms angeordnet sind.

Zur Beschleunigung des Verfahrens können gleichzeitig mehrere Vorrichtungen zum Entfernen von 3D-Fehlern zum Einsatz gelangen, wobei jede Vorrichtung eine Teilfläche des Karosserieteils oder der Karosserie bearbeitet. Es können gleichzeitig Vorrichtungen zum Einsatz gelangen, bei denen Sensor und Reparaturwerkzeug wahlweise lösbar mit dem Roboterarm verbindbar sind und Vorrichtungen bei denen Sensor und Reparaturwerkzeug zwischen einer Arbeits- und einer Ruheposition hin- und herbewegbar sind.

Für die berührungslose Überprüfung der üblicherweise lackierten Außenhaut von Karosserien oder von Teilen einer Karosserie kommt vorzugsweise die Überprüfung mit Hilfe eines deflektometrischen Messprinzips in Betracht. Der Sensor zur Durchführung der deflektometischen Messung, weist eine Beleuchtungseinheit und eine Kamera auf. Ein periodisches Muster wird von der Kamera über die spiegelnde Außenhaut der Karosserie bzw. des Karosserieteils erfasst. Ein 3D-Fehler in der Außenhaut hat eine Veränderung des periodischen Musters zur Folge, die von der Kamera erkannt wird. Die Messfeldgröße eines derartigen Sensors entspricht beispielsweise dem DIN A5 Format.

Der Roboter bewegt den Sensor mit Hilfe des Manipulators, beispielsweise in Form des Roboterarms, in einem konstanten Arbeitsabstand, von beispielsweise 400 mm über die Außenhaut. Die Akquisition der Bilddaten pro Messposition ist so kurz, dass eine kontinuierliche Bewegung des von dem Manipulator geführten Sensors möglich ist. Die von der Kamera erfassten Bilddaten werden an die Steuerung des Inspektionssystems übertragen, dass die Ausprägung des 3D-Fehlers anhand der übertragenen Bilddaten bestimmt und die Position des erkannten 3D-Fehlers auf der Außenhaut speichert. Die Bestimmung der Ausprägung und Speicherung der Position von erkannten 3D-Fehlern erfolgt, während der Sensor weitere Bilddaten auf der Außenhaut der Karosserie bzw. des Karosserieteils erfasst.

Um den Sensor in konstantem Arbeitsabstand über die Außenhaut zu bewegen, werden vorzugsweise vor dem Überprüfen der Außenhaut 3D-Koordinaten der Außenhaut bestimmt, die eine Führung des Sensors anhand dieser Daten ermöglichen. Ein Verfahren zum Bestimmen von 3D-Koordinaten der Außenhaut von Objekten, wie beispielsweise Karosserieteilen, ist aus dem Stand der Technik bekannt. Insoweit wird auf die DE 10 2010 018 979 A1 hingewiesen.

Diese zuvor bestimmten Daten können als CAD-Modelle der jeweiligen Karosserie bzw. des Karosserieteils vor dem Überprüfen der Außenhaut auf 3D-Fehler in die Steuerung des optischen Inspektionssystems eingelesen werden. Alternativ besteht die Möglichkeit, die 3D-Koordinaten während der Überprüfung der Außenhaut fortlaufend, mit geringem Zeitversatz zu der Überprüfung zu erfassen.

Nachfolgend wird die Erfindung anhand der Figuren näher erläutert. Es zeigen:
- **Figur 1a**: eine Vorrichtung zum Entfernen von 3D-Fehlern in der Außenhaut eines Karosserieteils während der Überprüfung der Außenhaut,
- **Figur 1b**: die Vorrichtung nach Figur 1a während des automatisierten Entfernens zuvor erkannter 3D-Fehler,
- **Figur 2a**: ein weiteres Ausführungsbeispiel einer Vorrichtung zum Entfernen von 3D-Fehlern in der Außenhaut eines Karosserieteils, während der Überprüfung der Außenhaut,
- **Figur 2b**: die Vorrichtung nach Figur 2a während des automatisierten Entfernens zuvor erkannter 3D-Fehler,
- **Figur 3**: eine Aufsicht auf eine Anordnung umfassend vier Vorrichtungen zum Entfernen von 3D-Fehlern in der Außenhaut der Karosserie eines Kraftfahrzeugs.

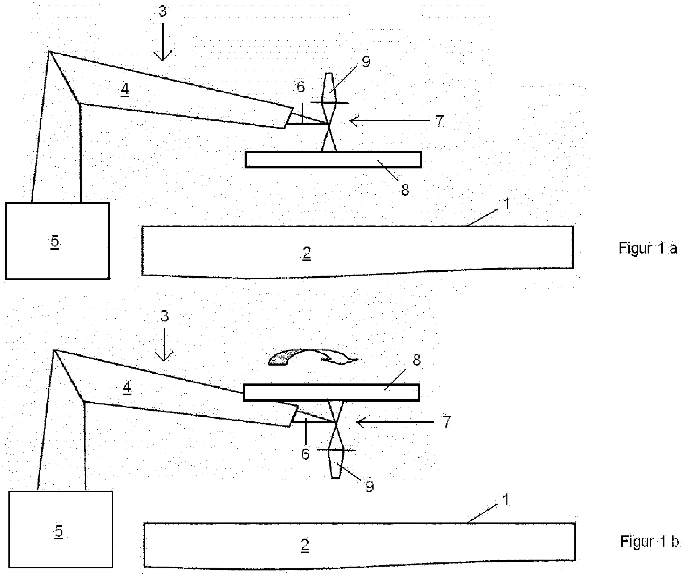

Figur 1a zeigt eine Vorrichtung zum Entfernen von 3D-Fehlern, insbesondere Dellen, in der Außenhaut (1) eines lackierten Karosserieteils (2). Die Vorrichtung besteht aus einem optischen Inspektionssystem (3) umfassend einen Industrieroboter mit einem als Roboterarm ausgestalteten Manipulator (4) und einer Steuerung (5). An dem Roboterarm (4) ist endseitig über ein schematisch dargestelltes Gelenk (6) ein Effektor (7) angeordnet, der einen Sensor (8) und ein Reparaturwerkzeug (9) aufweist. Der Sensor (8) arbeitet nach dem deflektometrischen Messprinzip. Zu diesem Zweck besteht der Sensor (8) aus einer von einer Beleuchtungseinheit beleuchteten Mattscheibe zur Projektion eines periodischen Musters auf die lackierte und daher spiegelnde Außenhaut (1) sowie einer Kamera zur Erfassung des periodischen Musters. Bei dem Reparaturwerkzeug (9) handelt es sich um eine Induktionsheizung, die über eine von niederfrequentem Wechselstrom durchflossene Spule ein magnetisches Wechselfeld erzeugt. Das magnetische Wechselfeld induziert in der aus Blech bestehenden Außenhaut (1) Wirbelströme, wobei die Wirbelstromverluste die Heizwirkung ohne Wärmeleitung in der Außenhaut (1) erzeugen. Figur 1a zeigt den Sensor (8) in einer Arbeitsposition, in der sowohl die Beleuchtungseinheit, als auch die Kamera in Richtung der Außenhaut (1) des Karosserieteils (2) ausgerichtet sind. In dieser Arbeitsposition des Sensors (8) ist das Reparaturwerkzeug (9) von der Außenhaut (1) abgewandt. Durch Schwenken des Effektors (7) um die Gelenkachse des Gelenkes (6) wird der Sensor (8) in die in Figur 1b dargestellte Ruheposition bewegt, wobei das Reparaturwerkzeug (9) in die Arbeitsposition gelangt. In der Arbeitsposition des Reparaturwerkzeugs (9) befindet sich die Induktionsheizung in geringem Abstand zu einem erkannten 3D-Fehler in der Außenhaut (1) des Karosserieteils (2).

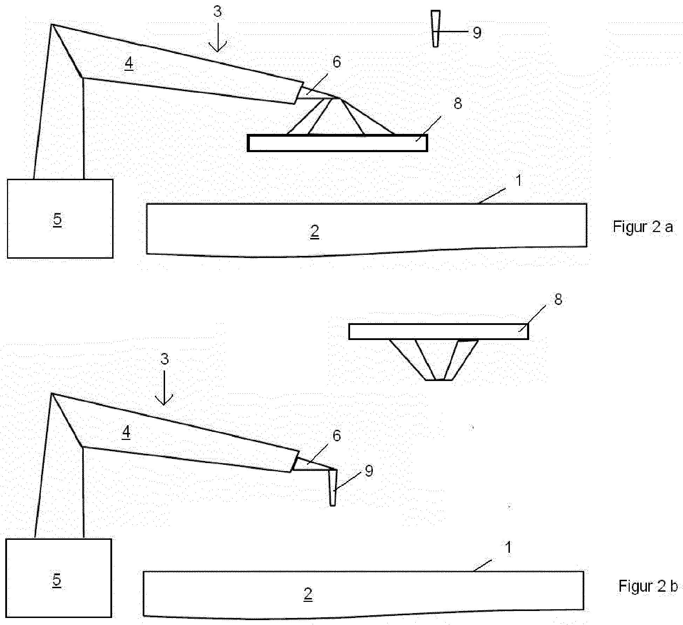

Die Vorrichtung nach Figuren 2a, 2b stimmt im Aufbau im Wesentlichen mit der Vorrichtung nach Figur 1 überein. Ein Unterschied der Vorrichtung nach Figuren 2a, 2b besteht jedoch darin, dass der Sensor (8) und das Reparaturwerkzeug (9) wahlweise lösbar mit dem Roboterarm (4) verbindbar sind. In Figur 2a ist der Sensor (8) mit dem Gelenk (6) des Roboterarms (4) verbunden, während sich das Reparaturwerkzeug (9) in einem Magazin des Industrieroboters befindet. In Figur 2b befindet sich indes der Sensor (8) in dem Magazin des Industrieroboters, während das Reparaturwerkzeug (9) mit dem Gelenk (6) des Roboterarms (4) verbunden ist.

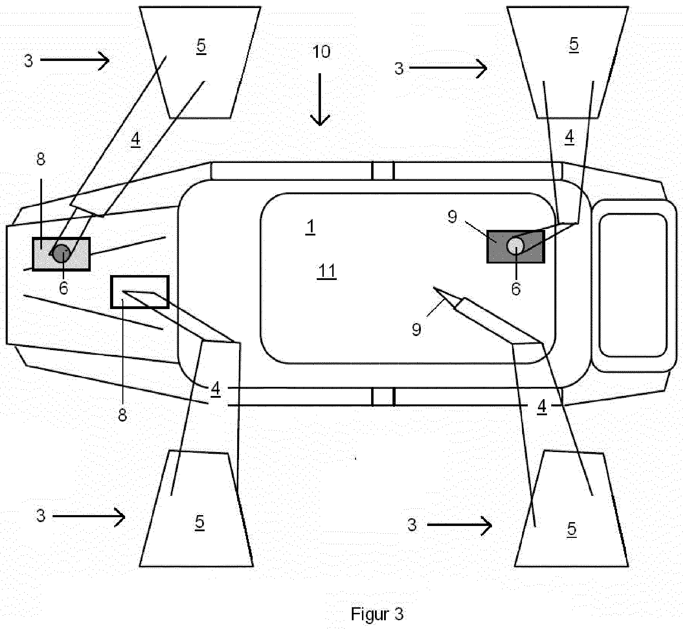

Figur 3 zeigt eine Anordnung umfassend insgesamt vier Vorrichtungen zum Entfernen von 3D-Fehlern in der Außenhaut (1) einer Karosserie (11), wobei die beiden oberen Vorrichtungen entsprechend Figuren 1a, 1b und die beiden unteren Vorrichtungen entsprechend Figuren 2a, 2b ausgestaltet sind. Selbstverständlich liegt es im Rahmen der Erfindung ausschließlich Vorrichtungen des Typs nach Figuren 1a, 1b oder ausschließlich des Typs nach Figuren 2a, 2b zu verwenden. Die Anordnung (10) nach Figur 3 erlaubt eine schnelle Überprüfung der gesamten Außenhaut (1) der Karosserie (11) und das automatisierte, rasche Entfernen von 3D-Fehlern, wie dies beispielsweise bei Hagelschäden erforderlich ist.

In der Anordnung (10) ist das optische Inspektionssystem (3) oben links in der Figur 3 im Überprüfungsbetrieb der Außenhaut (1), während das Inspektionssystem (3) oben rechts zuvor erkannte 3D-Fehler bereits automatisiert entfernt. Das unten links in Figur 3 dargestellte optische Inspektionssystem (3) überprüft die Außenhaut (1) der Karosserie (11) auf 3D-Fehler, während das optische Inspektionssystem (3) unten rechts in Figur 3 bereits zuvor erkannte 3D-Fehler der Außenhaut (1) entfernt.

### Die optischen Inspektionssysteme (3) arbeiten wie folgt:

Zunächst wird der Sensor (8) zum Überprüfen der Außenhaut (1) mit Hilfe des Roboterarms (4) in eine Arbeitsposition mit konstantem Abstand in Bezug zu dem Karosserieteil (2) bzw. der Karosserie (11) gebracht. Sodann wird zum Überprüfen der Außenhaut der Sensor im Arbeitsabstand über das Karosserieteil (2) bzw. die Karosserie (11) bewegt, wobei die Kamera des Sensors (8) während der kontinuierlichen Bewegung des Sensors (8) Bilddaten von der Außenhaut des Karosserieteils (2) bzw. der Karosserie (11) an definierten Messpositionen erfasst. Die Erfassung der Bilddaten erfolgt bei kontinuierlicher Bewegung des Sensors (8) über die Außenhaut (1). Die erfassten Bilddaten werden unmittelbar an die Steuerung (5) zum Bestimmen der Ausprägung und zum Speichern der Position von erkannten 3D-Fehlern in der Außenhaut übertragen. Da die Lage des Karosserieteils (2) bzw. der Karosserie (11) in Bezug zu dem raumbezogenen Koordinatensystem des Industrieroboters bekannt ist, kann die Position erkannter 3D-Fehler unproblematisch gespeichert werden. Nachdem sämtliche 3D-Fehler von dem optischen Inspektionssystem (3) hinsichtlich ihrer Ausprägung bestimmt und deren Position gespeichert wurden, wird das Reparaturwerkzeug (9) in Form der Induktionsheizung in die Arbeitsstellung gebracht (vgl. Figuren 1b, 2b). Anschließend erfolgt das automatisierte, robotergestützte Entfernen der zuvor erkannten 3D-Fehler mit Hilfe des Reparaturwerkzeugs (9) an den zuvor gespeicherten Positionen der 3D-Fehler.

Die Parameter zum Betrieb der Induktionsheizung, nämlich die Temperaturobergrenze und die Dauer der Wärmebehandlung werden von der Steuerung (5) abhängig von der Ausprägung des an der jeweiligen Position erkannten 3D-Fehlers gesteuert. Zusätzlich können zur Steuerung der Parameter der Wärmebehandlung Kenndaten über die Materialbeschaffenheit und die Stärke der Außenhaut sowie erfindungsgemäß die Schichtdicke des Lackaufbaus eingegeben werden. Als Kenndaten für die Materialbeschaffenheit kommen insbesondere die Art und Zusammensetzung des Blechs der Außenhaut in Betracht. Durch Eingabe dieser zusätzlichen Kenndaten kann die Qualität des Reparaturergebnisses beim Entfernen der erkannten 3D-Fehler verbessert werden. Das Erfassen der Schichtdicke des Lackaufbaus auf der Außenhaut (1) kann gleichzeitig mit dem Überprüfen der Außenhaut (1) auf 3D-Fehler erfolgen, wenn an dem Effektor (7) neben dem Sensor (8) einen Schichtdicke-Messer angeordnet ist.

**Bezugszeichenliste**

| **Nr.** | **Bezeichnung** |
|---|---|
| 1 | Außenhaut |
| 2 | Karosserieteil |
| 3 | Optisches Inspektionssystem |
| 4 | Manipulator |
| 5 | Steuerung |
| 6 | Gelenk |
| 7 | Effektor |
| 8 | Sensor |
| 9 | Reparaturwerkzeug |
| 10 | Anordnung |
| 11 | Karosserie |

## Patentansprüche

1. Verfahren zum Entfernen von 3D-Fehlern in der Außenhaut (1) von Karosserien (11) oder von Teilen (2) einer Karosserie umfassend die Schritte:
- berührungsfreies Überprüfen der Außenhaut (1) mit Hilfe mindestens eines maschinengeführten Sensors (8) eines optischen Inspektionssystems (3) zur Erkennung von 3D-Fehlern
- Bestimmen der Ausprägung und Speichern der Position von erkannten 3D-Fehlern in Bezug auf die Außenhaut (1) in einer Steuerung des Inspektionssystems (3) und
- automatisiertes Entfernen der erkannten 3D-Fehler mit Hilfe mindestens eines maschinengeführten Reparaturwerkzeugs (9) des optischen Inspektionssystems (3) an den zuvor gespeicherten Positionen,
**dadurch gekennzeichnet, dass**
- vor dem automatisierten Entfernen der erkannten 3D-Fehler die Schichtdicke eines Lackaufbaus auf der Außenhaut (1) erfasst wird,
- zumindest die Schichtdicke des Lackaufbaus in die Steuerung des Inspektionssystems eingegeben wird,
- die erkannten 3D-Fehler mit Hilfe eines Reparaturwerkzeugs (9) zur Erzeugung von Induktionswärme in der Außenhaut (1) entfernt werden, wobei die Parameter der Induktionswärmebehandlung, nämlich die Temperaturobergrenze und die Dauer der Induktionswärmebehandlung, in Abhängigkeit von den in die Steuerung eingegebenen Daten gesteuert werden.

2. Verfahren nach Anspruch 1, **dadurch gekennzeichnet, dass** der Sensor (8) und das Reparaturwerkzeug (9) mit einem Manipulator (4) des optischen Inspektionssystems (3) geführt werden.

3. Verfahren nach Anspruch 2, **dadurch gekennzeichnet, dass** der Sensor (8) und das Reparaturwerkzeug (9) von demselben Manipulator (4) des optischen Inspektionssystems (3) geführt werden.

4. Verfahren nach einem der Ansprüche 1 bis 3, **dadurch gekennzeichnet, dass** die Überprüfung der Außenhaut (1) mit Hilfe eines deflektometrischen Messprinzips erfolgt.

5. Verfahren nach einem der Ansprüche 1 bis 4, **dadurch gekennzeichnet, dass** vor dem Überprüfen der Außenhaut (1) 3D-Koordinaten der Außenhaut (1) bestimmt werden und der Sensor (8) des optischen Inspektionssystems (3) anhand der 3D-Koordinaten geführt wird.

6. Vorrichtung zum Entfernen von 3D-Fehlern in der Außenhaut (1) von Karosserien (11) oder von Teilen (2) einer Karosserie, mit einem optisches Inspektionssystem (3) zum berührungsfreien Überprüfen der Außenhaut (1) umfassend
- einen maschinengeführten Sensor (8) zur Erkennung der 3D-Fehler,
- ein maschinengeführtes Reparaturwerkzeug (9) zum Entfernen der erkannten 3D-Fehler sowie
- eine Steuerung (5),
**dadurch gekennzeichnet, dass** das Reparaturwerkzeug (9) eine Induktionsheizung zur Erzeugung von Induktionswärme in der Außenhaut aufweist, an dem optischen Inspektionssystem (3) Mittel zum Erfassen der Schichtdicke des Lackaufbaus auf der Außenhaut angeordnet sind und die Steuerung (5) zum Bestimmen der Ausprägung und Speichern der Position erkannter 3D-Fehlern in Bezug auf die Außenhaut (1) und zur Steuerung des Reparaturwerkzeugs (9) unter Berücksichtigung der zuvor bestimmten Ausprägung und gespeicherten Position von 3D-Fehlern sowie der erfassten Schichtdicke ausgestaltet ist.

7. Vorrichtung nach Anspruch 6, **dadurch gekennzeichnet, dass** das optische Inspektionssystem (3) einen Roboter mit einem Manipulator (4) umfasst, der Sensor (8) und das Reparaturwerkzeug (9) an demselben Manipulator (4) angeordnet sind und der Sensor (8) und das Reparaturwerkzeug (9) zwischen einer Arbeitsposition und einer Ruheposition hin- und herbewegbar sind.

8. Vorrichtung nach Anspruch 6, **dadurch gekennzeichnet, dass** der Sensor (8) und das Reparaturwerkzeug (9) wahlweise mit dem Manipulator (4) lösbar verbindbar sind.

9. Vorrichtung nach einem der Ansprüche 6 bis 8, **dadurch gekennzeichnet, dass** der Sensor (8) eine Beleuchtungseinheit und eine Kamera zur Vermessung der Außenhaut (1) nach dem deflektometrischen Messprinzips aufweist.

## Claims

1. A method for removing 3D defects in the outer skin (1) of car bodies (11) or parts (2) of a car body comprising the steps:
- contact-free checking of the outer skin (1) with the aid of at least one machine-guided sensor (8) of an optical inspection system (3) for the detection of 3D defects
- determining the manifestation and storing the position of detected 3D defects in relation to the outer skin (1) in a controller of the inspection system (3) and
- automated removal of the detected 3D defects with the aid of at least one machine-guided repair tool (9) of the optical inspection system (3) at the previously stored positions,
**characterized in that**
- before the automated removal of the detected 3D defects, the layer thickness of a paint structure on the outer skin (1) is detected,
- at least the layer thickness of the paint structure is input into the controller of the inspection system
- the detected 3D defects are removed with the aid of a repair tool (9) for producing induction heat in the outer skin (1),
wherein the parameters of the induction heat treatment, namely the temperature upper limit and the duration of the induction heat treatment are controlled depending on the data input into the controller.

2. The method according to claim 1, **characterized in that** the sensor (8) and the repair tool (9) are guided with a manipulator (4) of the optical inspection system (3).

3. The method according to claim 2, **characterized in that** the sensor (8) and the repair tool (9) are guided by the same manipulator (4) of the optical inspection system (3).

4. The method according to any one of claims 1 to 3, **characterized in that** the checking of the outer skin (1) is made with the aid of a deflectometric measurement principle.

5. The method according to any one of claims 1 to 4, **characterized in that** before the checking of the outer skin (1) 3D coordinates of the outer skin (1) are determined and the sensor (8) of the optical inspection system (3) is guided by means of the 3D coordinates.

6. An apparatus for the removal of 3D defects in the outer skin (1) of car bodies (11) or parts (2) of a car body with an optical inspection system (3) for the contact-free checking of the outer skin (1) comprising
- a machine-guided sensor (8) for detecting the 3D defects,
- a machine-guided repair tool (9) for removing the detected 3D defects as well as
- a controller (5),
**characterized in that** the repair tool (9) comprises an induction heater for generating induction heat in the outer skin, means for detecting the layer thickness of the paint structure on the outer skin are arranged on the optical inspection system (3) and the controller (5) is configured for determining the manifestation and storing the position of detected 3D defects in relation to the outer skin (1) and for controlling the repair tool (9) taking into account the previously determined manifestation and stored position of 3D defects and the detected layer thickness.

7. The apparatus according to claim 6, **characterized in that** the optical inspection system (3) comprises a robot with a manipulator (4), the sensor (8) and the repair tool (9) are arranged on the same manipulator (4) and the sensor (8) and the repair tool (9) are movable to and fro between a working position and a rest position.

8. The apparatus according to claim 6, **characterized in that** the sensor (8) and the repair tool (9) can optionally be detachably connected to the manipulator (4).

9. The apparatus according to any one of claims 6 to 8, **characterized in that** the sensor (8) comprises an illumination unit and a camera for measurement of the outer skin (1) according to the deflectometric measurement principle.

## Revendications

1. Procédé destiné à éliminer des défauts en 3D dans l'enveloppe extérieure (1) de carrosseries (11) ou de pièces (2) d'une carrosserie, comprenant les étapes :
- de la vérification sans contact de l'enveloppe extérieure (1), à l'aide d'au moins un capteur (8) assisté par ordinateur d'un système d'inspection optique (3) destiné à identifier les défauts en 3D,
- de la détermination de l'étendue et de la mémorisation de la position de défauts en 3D identifiés par rapport à l'enveloppe extérieure (1) dans un système de commande du système d'inspection (3) et
- de l'élimination automatisée des défauts en 3D identifiés à l'aide d'au moins un outil de réparation (9) assisté par ordinateur du système d'inspection (3) optique sur les positions précédemment mémorisées,
**caractérisé en ce**
- **qu'**avant l'élimination automatisée des défauts en 3D identifiés, on détecte l'épaisseur de couche d'une structure de peinture sur l'enveloppe extérieure (1),
- **qu'**on saisit au moins l'épaisseur de couche de la structure de peinture dans le système de commande du système d'inspection,
- **qu'**on élimine les défauts en 3D identifiés à l'aide d'un outil de réparation (9) destiné à générer de la chaleur par induction dans l'enveloppe extérieure (1),
les paramètres du traitement thermique par induction, à savoir la limite supérieure de température et la durée du traitement thermique par induction étant commandés en fonction des données saisies dans le système de commande.

2. Procédé selon la revendication 1, **caractérisé en ce qu'**on guide le capteur (8) et l'outil de réparation (9) avec un manipulateur (4) du système d'inspection (3) optique.

3. Procédé selon la revendication 2, **caractérisé en ce qu'**on guide le capteur (8) et l'outil de réparation (9) avec le même manipulateur (4) du système d'inspection (3) optique.

4. Procédé selon l'une quelconque des revendications 1 à 3, **caractérisé en ce que** la vérification de l'enveloppe extérieure (1) s'effectue à l'aide d'un principe de mesure déflectométrique.

5. Procédé selon l'une quelconque des revendications 1 à 4, **caractérisé en ce qu'**avant la vérification de l'enveloppe extérieure (1), on détermine des coordonnées en 3D de l'enveloppe extérieure (1) et on guide le capteur (8) du système d'inspection (3) optique à l'aide des coordonnées en 3D.

6. Dispositif destiné à éliminer des défauts en 3D dans l'enveloppe extérieure (1) de carrosseries (11) ou de pièces (2) d'une carrosserie, avec un système d'inspection (3) optique, destiné à la vérification sans contact de l'enveloppe extérieure (1), comprenant :
- un capteur (8) assisté par ordinateur pour identifier les défauts en 3D,
- un outil de réparation (9) assisté par ordinateur pour éliminer les défauts en 3D, ainsi
- qu'un système de commande (5),
**caractérisé en ce que** l'outil de réparation (9) comporte un chauffage par induction, destiné à générer de la chaleur par induction dans l'enveloppe extérieure, sur le système d'inspection (3) optique sont placés des moyens destinés à détecter l'épaisseur de couche de la structure de peinture sur l'enveloppe extérieure et le système de commande (5) est conçu pour déterminer l'étendue et pour mémoriser la position de défauts en 3D identifiés par rapport à l'enveloppe extérieure (1) et pour commander l'outil de réparation (9) sous considération de l'étendue précédemment déterminée et de la position mémorisée de défauts en 3D, ainsi que de l'épaisseur de couche détectée.

7. Dispositif selon la revendication 6, **caractérisé en ce que** le système d'inspection (3) optique comprend un robot avec un manipulateur (4), le capteur (8) et l'outil de réparation (9) sont placés sur le même manipulateur (4) et le capteur (8) et l'outil de réparation (9) sont déplaçables en aller et retour entre la position de travail et une position de repos.

8. Dispositif selon la revendication 6, **caractérisé en ce que** le capteur (8) et l'outil de réparation (9) peuvent être assemblés au choix de manière amovible avec le manipulateur (4).

9. Dispositif selon l'une quelconque des revendications 6 à 8, **caractérisé en ce que** le capteur (8) comporte une unité d'éclairage et une caméra destinée à mesurer l'enveloppe extérieure (1) selon le principe de mesure déflectométrique.
